# EUROPEAN PATENT APPLICATION

(11) **EP 4 166 816 A1**
(43) Date of publication of application: **19.04.2023**
(21) Application number: 21875214.5
(22) Date of filing: 15.09.2021
(51) Int. Cl.: F16H 57/023, F16H 3/089

(54) **VEHICLE DRIVE DEVICE**

(30) Priority: 30.09.2020 JP 2020165064
(71) Applicant: AISIN CORPORATION, Aichi 448-8650 (JP)
(72) Inventor: KIDA, Eiji, Kariya-shi, Aichi 448-8650 (JP); HABARA, Yuki, Kariya-shi, Aichi 448-8650 (JP)
(74) Representative: Kramer Barske Schmidtchen Patentanwälte PartG mbB
(86) International application number: PCT/JP2021/033873
(87) International publication number: WO 2022/070912

(57) **Abstract**

A transmission (1) configured to change a speed of rotation transmitted from a rotary electric machine (MG) side includes a first gear (11) and a second gear (12) disposed on a first axis (X1), and a third gear (13), a fourth gear (14), and an output gear (15) disposed on a second axis (X2) parallel to the first axis (X1). The first gear (11) and the third gear (13) mesh with each other, and the second gear (12) and the fourth gear (14) mesh with each other. A differential gear mechanism (2) includes a differential input gear (21) disposed on a third axis (X3) parallel to the first axis (X1) and the second axis (X2) and meshing with the output gear (15). The first gear (11) and the second gear (12) are disposed on a first axial side (L 1) with respect to a rotor (RT) of the rotary electric machine (MG). The parking gear (41) is disposed on the second axis (X2) on a second axial side (L2) with respect to the third gear (13), the fourth gear (14), and the output gear (15).

## Description

### TECHNICAL FIELD

The present invention relates to a vehicle drive device including a rotary electric machine that functions as a driving force source for wheels, a pair of output members drivingly connected to the wheels, a transmission that changes the speed of rotation transmitted from the rotary electric machine side, a differential gear mechanism that distributes the rotation transmitted from the transmission to the pair of output members, and a parking mechanism including a parking gear.

### BACKGROUND ART

An example of such a vehicle drive device is disclosed in Patent Document 1 below. In the following descriptions of "Background Art" and "Problem to be Solved by the Invention", reference numerals in Patent Document 1 are quoted in parentheses.

In the vehicle drive device of Patent Document 1, a transmission includes a first gear (3) and a second gear (7) disposed coaxially with a rotary electric machine (1), and a third gear (12), a fourth gear (10), and an output gear (11) disposed on an axis different from that of the rotary electric machine (1). A parking gear (9) is disposed coaxially with the third gear (12), the fourth gear (10), and the output gear (11).

### Related Art Documents

### Patent Documents

Patent Document 1: Chinese Unexamined Patent Application Publication No. 108799440 (CN 108799440 A)

### SUMMARY OF THE INVENTION

### Problem to be Solved by the Invention

In general, the parking gear (9) is switchable between a non-rotatable locked state and a rotatable unlocked state by selectively engaging an engagement mechanism driven by a drive mechanism including an actuator.

Although no description is given in Patent Document 1, the drive mechanism of the parking mechanism described above is generally supported by a case that houses the rotary electric machine (1), the transmission, a differential gear mechanism (14), and the parking gear (9). In this case, the rigidity of the case is secured by increasing the thickness of a portion of the case that supports the drive mechanism. However, such a method is disadvantageous in that the weight and cost of the case may increase.

In view of the above, it is desirable to realize a vehicle drive device that reduces the weight and cost of the case.

### Means for Solving the Problem

As the characteristic configuration of the vehicle drive device in view of the above, the vehicle drive device includes:
a rotary electric machine including a rotor disposed on a first axis and functioning as a driving force source for wheels;
a pair of output members drivingly connected to the wheels;
a transmission configured to change a speed of rotation transmitted from the rotary electric machine side;
a differential gear mechanism configured to distribute the rotation transmitted from the transmission to the pair of output members;
a parking mechanism including a parking gear; and
a case that houses the rotary electric machine, the transmission, the differential gear mechanism, and the parking gear, in which
the transmission includes a first gear and a second gear disposed on the first axis, and a third gear, a fourth gear, and an output gear disposed on a second axis parallel to the first axis,
the first gear and the third gear mesh with each other, and the second gear and the fourth gear mesh with each other,
the differential gear mechanism includes a differential input gear disposed on a third axis parallel to the first axis and the second axis and meshing with the output gear,
a direction parallel to the first axis is defined as an axial direction, one side in the axial direction is defined as a first axial side, and the other side in the axial direction is defined as a second axial side,
the first gear and the second gear are disposed on the first axial side with respect to the rotor, and
the parking gear is disposed on the second axis on the second axial side with respect to the third gear, the fourth gear, and the output gear.

According to this characteristic configuration, the parking mechanism including the parking gear can be disposed close to the rotary electric machine in the axial direction. In general, the rotary electric machine is supported by the case, and the rigidity of the portion of the case that supports the rotary electric machine is secured sufficiently. Therefore, by disposing the parking mechanism close to the rotary electric machine, it is possible to reduce the area where the thickness of the case is increased to appropriately support the parking mechanism. Thus, the weight and cost of the case can be reduced.

### BRIEF DESCRIPTION OF THE DRAWINGS

[FIG. 1] FIG. 1 is a skeleton diagram of a vehicle drive device according to a first embodiment.
[FIG. 2] FIG. 2 is an enlarged sectional view of a main part of the vehicle drive device according to the first embodiment.

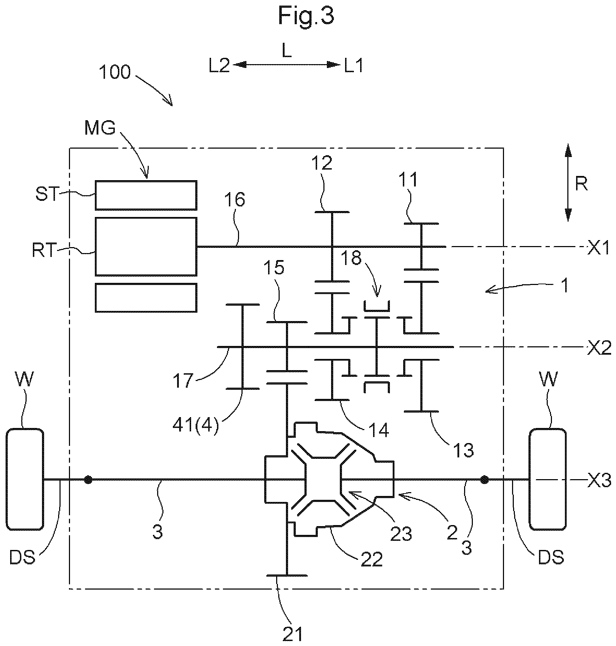

[FIG. 3] FIG. 3 is a skeleton diagram of a vehicle drive device according to a second embodiment.

### MODES FOR CARRYING OUT THE INVENTION

### 1. First Embodiment

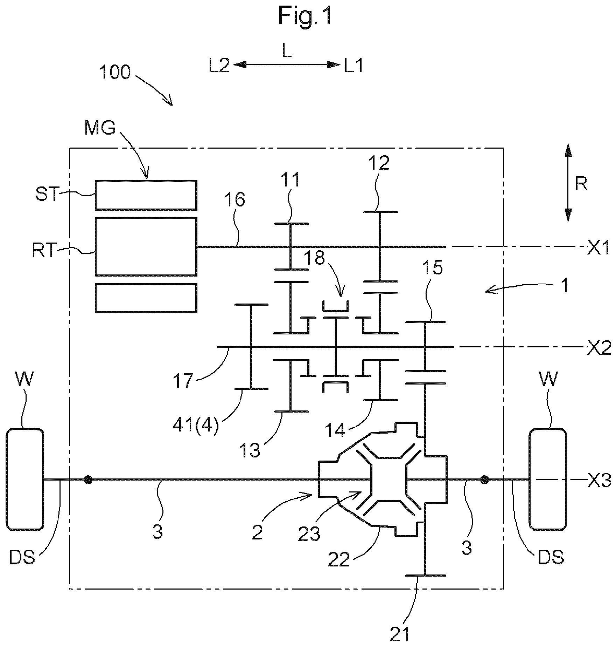

Hereinafter, a vehicle drive device 100 according to a first embodiment will be described with reference to the drawings. As shown in FIG. 1, the vehicle drive device 100 includes a rotary electric machine MG, a transmission 1, a differential gear mechanism 2, a pair of output members 3, a parking mechanism 4, and a case 9.

The rotary electric machine MG functions as a driving force source for wheels W. The rotary electric machine MG has a function as a motor (electric motor) that receives supply of electric power to generate driving force, and a function as a generator (electric power generator) that receives supply of driving force to generate electric power. Specifically, the rotary electric machine MG is electrically connected to a power storage device such as a battery or a capacitor (not shown). The rotary electric machine MG generates a driving force by power running with electric power stored in the power storage device. The rotary electric machine MG generates electric power with a driving force transmitted from the wheels W to charge the power storage device.

The rotary electric machine MG includes a stator ST and a rotor RT. The stator ST is fixed to a non-rotating member (in this case, the case 9). The rotor RT is supported so as to be rotatable relative to the stator ST. The rotor RT is disposed on a first axis X1. That is, the rotor RT is disposed so as to rotate about the first axis X1 serving as a rotation axis.

In the following description, the direction parallel to the first axis X1 will be referred to as "axial direction L". One side in the axial direction L will be referred to as "first axial side L1" and the other side in the axial direction L will be referred to as "second axial side L2". The direction orthogonal to a rotation axis of a rotating member such as the rotor RT will be referred to as "radial direction R" with respect to each rotation axis. When it is not necessary to distinguish the rotation axis to be used as a reference, or when the rotation axis to be used as a reference is clear, the direction may be simply referred to as "radial direction R".

The transmission 1 is a device that changes the speed of rotation transmitted from the rotary electric machine MG side. In the present embodiment, the transmission 1 changes the speed of rotation of the rotor RT of the rotary electric machine MG and transmits the rotation to the differential gear mechanism 2.

The transmission 1 includes a first gear 11, a second gear 12, a third gear 13, a fourth gear 14, and an output gear 15. In the present embodiment, the transmission 1 further includes a first shaft member 16, a second shaft member 17, and a meshing type engagement device 18.

The first gear 11 and the second gear 12 are disposed on the first axis X1. That is, the first gear 11 and the second gear 12 are disposed so as to rotate about the first axis X1 serving as the rotation axis. In the present embodiment, the first shaft member 16 is also disposed on the first axis X1. The first shaft member 16 is a shaft member formed so as to extend along the first axis X1. In the present embodiment, the first gear 11 and the second gear 12 are connected to the first shaft member 16 so as to rotate integrally with the first shaft member 16.

The first gear 11 and the second gear 12 are disposed on the first axial side L1 with respect to the rotor RT of the rotary electric machine MG. In the present embodiment, the first gear 11 and the second gear 12 are connected to the rotor RT so as to rotate integrally with the rotor RT. In the present embodiment, the first gear 11 is disposed on the second axial side L2 with respect to the second gear 12.

The third gear 13, the fourth gear 14, and the output gear 15 are disposed on a second axis X2 parallel to the first axis X1. That is, the third gear 13, the fourth gear 14, and the output gear 15 are disposed so as to rotate about the second axis X2 serving as a rotation axis. In the present embodiment, the second shaft member 17 is also disposed on the second axis X2. The second shaft member 17 is a shaft member formed so as to extend along the second axis X2.

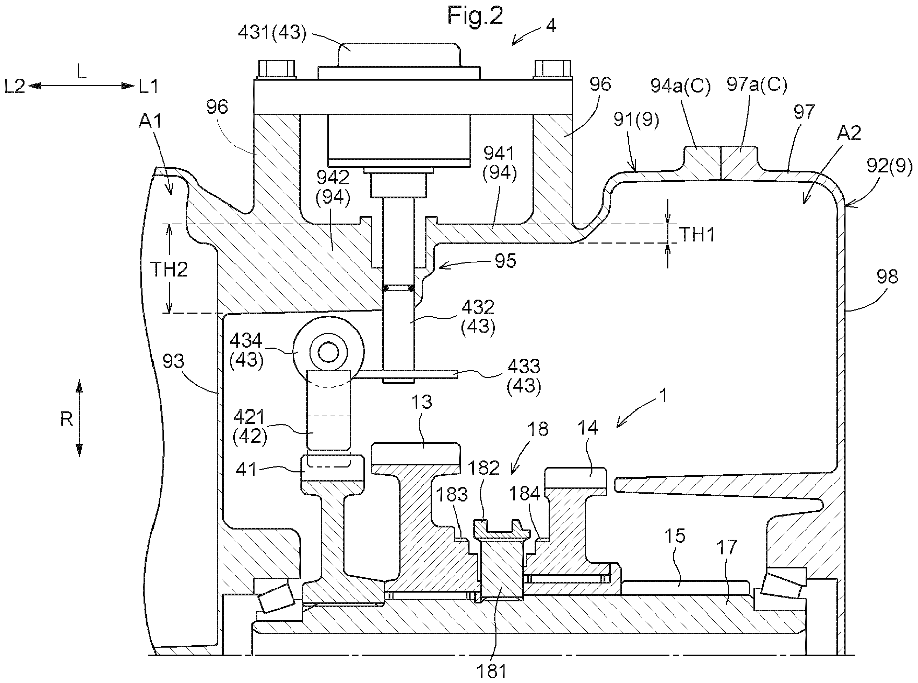

In the present embodiment, the third gear 13 and the fourth gear 14 are supported so as to be rotatable relative to the second shaft member 17. The output gear 15 is connected to the second shaft member 17 so as to rotate integrally with the second shaft member 17. In the example shown in FIG. 2, each of the third gear 13 and the fourth gear 14 is supported via a bearing so as to be rotatable relative to the second shaft member 17. The output gear 15 is formed integrally with the second shaft member 17.

In the present embodiment, the third gear 13 and the fourth gear 14 are disposed on either one of the first axial side L1 and the second axial side L2 with respect to the output gear 15. That is, in the present embodiment, the output gear 15 is not disposed between the third gear 13 and the fourth gear 14 in the axial direction L. In the illustrated example, the third gear 13 and the fourth gear 14 are disposed on the second axial side L2 with respect to the output gear 15.

As shown in FIG. 1, the first gear 11 and the third gear 13 are disposed so as to mesh with each other. The second gear 12 and the fourth gear 14 are disposed so as to mesh with each other. In the present embodiment, the first gear 11 is formed to have a smaller diameter than the second gear 12. The third gear 13 is formed to have a larger diameter than the fourth gear 14. As described above, the first gear 11 and the second gear 12 are disposed coaxially, and the third gear 13 and the fourth gear 14 are disposed coaxially. Therefore, in the present embodiment, the gear ratio of the third gear 13 to the first gear 11 is larger than the gear ratio of the fourth gear 14 to the second gear 12.

The meshing type engagement device 18 is a device that selectively connects either one of the third gear 13 and the fourth gear 14 to the second shaft member 17. As described above, in the present embodiment, the gear ratio of the third gear 13 to the first gear 11 is larger than the gear ratio of the fourth gear 14 to the second gear 12. Therefore, when the meshing type engagement device 18 connects the third gear 13 to the second shaft member 17, a low speed that is a shift speed having a relatively large speed ratio is formed. When the meshing type engagement device 18 connects the fourth gear 14 to the second shaft member 17, a high speed that is a shift speed having a relatively small speed ratio is formed. In the present embodiment, the meshing type engagement device 18 is switchable to a neutral state in which neither of the shift speeds is formed. When the meshing type engagement device 18 is in the neutral state, the transmission 1 is in a state in which the rotation is not transmitted between the rotary electric machine MG and the differential gear mechanism 2, that is, a state in which the driving force is not transmitted between the rotary electric machine MG and the pair of wheels W.

The differential gear mechanism 2 distributes the rotation transmitted from the transmission 1 to the pair of output members 3. The differential gear mechanism 2 includes a differential input gear 21. In the present embodiment, the differential gear mechanism 2 further includes a differential case 22 and a differential gear unit 23.

The differential input gear 21 is disposed on a third axis X3 parallel to the first axis X1 and the second axis X2. That is, the differential input gear 21 is disposed so as to rotate about the third axis X3 serving as a rotation axis. The differential input gear 21 meshes with the output gear 15.

The differential case 22 is a hollow member that houses the differential gear unit 23. The differential case 22 is connected to the differential input gear 21 so as to rotate integrally with the differential input gear 21.

The differential gear unit 23 distributes the rotation of the differential input gear 21 to the pair of output members 3. In the present embodiment, the differential gear unit 23 includes a pair of pinion gears disposed away from each other in the radial direction R across the third axis X3, and a pair of side gears disposed away from each other in the axial direction L on the third axis X3 so as to mesh with the pair of pinion gears.

In the present embodiment, the differential gear unit 23 is disposed so that the disposition area in the axial direction L overlaps at least one of the third gear 13 and the fourth gear 14. In the illustrated example, the fourth gear 14 is disposed on the second axial side L2 with respect to the output gear 15, and the third gear 13 is disposed on the second axial side L2 with respect to the fourth gear 14. The differential gear unit 23 is disposed on the second axial side L2 with respect to the differential input gear 21 that meshes with the output gear 15 so that the disposition area in the axial direction L overlaps the fourth gear 14.

As described above, in the present embodiment, the differential gear mechanism 2 includes the differential gear unit 23 that distributes the rotation of the differential input gear 21 to the pair of output members 3.

The third gear 13 and the fourth gear 14 are disposed on either one of the first axial side L1 and the second axial side L2 with respect to the output gear 15.

The differential gear unit 23 is disposed so that the disposition area in the axial direction L overlaps at least one of the third gear 13 and the fourth gear 14.

According to this configuration, the dimension of the vehicle drive device 100 in the axial direction L can be reduced compared to a configuration in which the differential gear unit 23 is disposed so that the disposition area in the axial direction L overlaps neither the third gear 13 nor the fourth gear 14.

The pair of output members 3 is drivingly connected to the wheels W. In the present embodiment, the pair of output members 3 is disposed away from each other in the axial direction L on the third axis X3. In the present embodiment, the pair of output members 3 is connected to the side gears constituting the differential gear unit 23 so as to rotate integrally with the side gears. The pair of output members 3 is connected to drive shafts DS drivingly connected to the wheels W so as to rotate integrally with the drive shafts DS.

The parking mechanism 4 includes a parking gear 41. The parking gear 41 is disposed on the second axis X2. The parking gear 41 is disposed on the second axial side L2 with respect to the third gear 13, the fourth gear 14, and the output gear 15. As described above, the first gear 11 meshing with the third gear 13 and the second gear 12 meshing with the fourth gear 14 are disposed on the first axial side L1 with respect to the rotor RT of the rotary electric machine MG. Therefore, the parking gear 41 is disposed between the rotor RT and each of the first gear 11 and the second gear 12 in the axial direction L. That is, the parking gear 41 is disposed to adjoin the rotary electric machine MG in the axial direction L. In the present embodiment, the parking gear 41 is connected to the second shaft member 17 so as to rotate integrally with the second shaft member 17.

The case 9 houses the rotary electric machine MG, the transmission 1, the differential gear mechanism 2, and the parking gear 41. In the present embodiment, the case 9 also houses the pair of output members 3.

As shown in FIG. 2, in the present embodiment, the meshing type engagement device 18 includes a support member 181, a switching member 182, a first engagement portion 183, and a second engagement portion 184. The support member 181, the switching member 182, the first engagement portion 183, and the second engagement portion 184 are disposed on the second axis X2.

The support member 181 is a member formed so as to protrude outward in the radial direction R from the second shaft member 17. The support member 181 is connected to the second shaft member 17 so as to rotate integrally with the second shaft member 17. In the illustrated example, the support member 181 is connected to the second shaft member 17 by spline engagement.

The switching member 182 is formed in a tubular shape covering an outer side of the support member 181 in the radial direction R. Internal teeth are formed in the inner peripheral portion of the switching member 182, and external teeth mating with the internal teeth are formed in the support member 181. These internal and external teeth are engaged so as to be relatively movable in the axial direction L and not to be relatively rotatable in the circumferential direction. Thus, the switching member 182 is supported so as to rotate integrally with the support member 181 and to move relative to the support member 181 in the axial direction L. That is, in the present embodiment, the switching member 182 is a sleeve of a dog clutch.

The first engagement portion 183 is connected to the third gear 13 so as to rotate integrally with the third gear 13. The first engagement portion 183 is disposed on the second axial side L2 with respect to the support member 181. The first engagement portion 183 is formed in a tubular shape with its axis on the second axis X2. External teeth engageable with the internal teeth of the switching member 182 so as to be relatively movable in the axial direction L and not to be relatively rotatable in the circumferential direction are formed in the outer peripheral portion of the first engagement portion 183.

The second engagement portion 184 is connected to the fourth gear 14 so as to rotate integrally with the fourth gear 14. The second engagement portion 184 is disposed on the first axial side L1 with respect to the support member 181. The second engagement portion 184 is formed in a tubular shape with its axis on the second axis X2. External teeth engageable with the internal teeth of the switching member 182 so as to be relatively movable in the axial direction L and not to be relatively rotatable in the circumferential direction are formed in the outer peripheral portion of the second engagement portion 184.

When the switching member 182 moves to the second axial side L2 relative to the support member 181 and the internal teeth of the switching member 182 and the external teeth of the first engagement portion 183 are engaged with each other, the third gear 13 is connected to the second shaft member 17, that is, the low speed described above is formed. When the switching member 182 moves to the first axial side L1 relative to the support member 181 and the internal teeth of the switching member 182 and the external teeth of the second engagement portion 184 are engaged with each other, the fourth gear 14 is connected to the second shaft member 17, that is, the high speed described above is formed. When the internal teeth of the switching member 182 are engaged with neither the external teeth of the first engagement portion 183 nor the external teeth of the second engagement portion 184, neither the third gear 13 nor the fourth gear 14 is connected to the second shaft member 17, that is, the neutral state described above is achieved.

In the present embodiment, the meshing type engagement device 18 is disposed between the third gear 13 and the fourth gear 14 in the axial direction L. That is, in the present embodiment, the support member 181, the switching member 182, the first engagement portion 183, and the second engagement portion 184 are disposed between the third gear 13 and the fourth gear 14 in the axial direction L. Therefore, the present embodiment can provide the configuration in which one switching member 182 is engaged with either one of the first engagement portion 183 and the second engagement portion 184 as described above without providing switching members in the first engagement portion 183 and the second engagement portion 184, respectively. That is, the switching member 182 can be shared between the first engagement portion 183 and the second engagement portion 184. Thus, an increase in the size of the meshing type engagement device 18 can be suppressed compared to the configuration in which the switching members are provided in the first engagement portion 183 and the second engagement portion 184, respectively.

As described above, in the present embodiment, the transmission 1 includes the first shaft member 16 disposed on the first axis X1, and the second shaft member 17 disposed on the second axis X2.

The rotor RT is connected to the first shaft member 16 so as to rotate integrally with the first shaft member 16.

The output gear 15 and the parking gear 41 are connected to the second shaft member 17 so as to rotate integrally with the second shaft member 17.

The first gear 11 and the second gear 12 are connected to the first shaft member 16 so as to rotate integrally with the first shaft member 16.

The third gear 13 and the fourth gear 14 are supported so as to be rotatable relative to the second shaft member 17.

The meshing type engagement device 18 that selectively connects either one of the third gear 13 and the fourth gear 14 to the second shaft member 17 is disposed on the second axis X2 between the third gear 13 and the fourth gear 14 in the axial direction L.

According to this configuration, in the power transmission path from the rotary electric machine MG to the pair of output members 3, the first gear 11 and the second gear 12 disposed on the upstream side are fixed gears that rotate integrally with the first shaft member 16, and the third gear 13 and the fourth gear 14 disposed on the downstream side are idling gears that rotate relative to the second shaft member 17. In general, the diameter of the fixed gear is easily reduced because there is no need to dispose a bearing or the like in a relative rotating portion as in the idling gear. Therefore, the diameters of the first gear 11 and the second gear 12 can be reduced easily. Thus, the diameters of the third gear 13 and the fourth gear 14 can also be reduced while securing a large speed reducing ratio of the power transmission path from the rotary electric machine MG to the pair of output members 3. Accordingly, the dimension of the vehicle drive device 100 in the radial direction R can be reduced.

According to this configuration, the meshing type engagement device 18 is disposed between the third gear 13 and the fourth gear 14 in the axial direction L. Thus, it is possible to realize a configuration in which either one of the third gear 13 and the fourth gear 14 is selectively connected to the second shaft member 17 while suppressing the increase in the size of the meshing type engagement device 18.

As shown in FIG. 2, in the present embodiment, the parking mechanism 4 further includes an engagement mechanism 42 and a drive mechanism 43.

The engagement mechanism 42 is selectively engaged with the parking gear 41. In the present embodiment, the engagement mechanism 42 includes an engagement member 421. The engagement member 421 pivots about an axis along the axial direction L so that the posture changes between an engagement posture in which the engagement member 421 is engaged with the parking gear 41 and a disengagement posture in which the engagement member 421 is not engaged with the parking gear 41.

The drive mechanism 43 drives the engagement mechanism 42. In the present embodiment, the drive mechanism 43 includes a drive device 431, a shaft member 432, a connection member 433, and a push member 434.

The drive device 431 includes an actuator such as a motor that rotates the shaft member 432 about an axis of the shaft member 432. The shaft member 432 is formed so as to extend along a specific radial direction R (vertical direction in FIG. 2) from the drive device 431. The connection member 433 is connected to the end of the shaft member 432 opposite to the portion connected to the drive device 431. The connection member 433 is a member that connects the shaft member 432 and the push member 434 so that the push member 434 moves along with the rotation of the shaft member 432. In the present embodiment, the push member 434 is formed in a rod shape extending in a direction orthogonal to the axis of the shaft member 432 (in the example shown in FIG. 2, a front-rear direction of the drawing sheet), and has an inclined surface intersecting that direction. The push member 434 moves along an axis of the push member 434 along with the rotation of the shaft member 432. Therefore, the engagement member 421 of the engagement mechanism 42 is pushed toward the parking gear 41 in conjunction with the shape of the inclined surface of the push member 434. Thus, the drive device 431 moves the push member 434 via the shaft member 432 and the connection member 433 to change the posture of the engagement member 421 between the engagement posture and the disengagement posture. In the present embodiment, the engagement member 421 is urged to the side of the disengagement posture by an urging member such as a spring (not shown). The engagement member 421 assumes the engagement posture when the push member 434 pushes the engagement member 421 against an urging force of the urging member. The drive device 431 moves the push member 434 in the opposite direction to terminate the push of the engagement member 421, and the engagement member 421 assumes the disengagement posture by the urging force of the urging member.

As shown in FIG. 2, in the present embodiment, the case 9 has a first housing chamber A1 that houses the rotary electric machine MG, and a second housing chamber A2 that houses the transmission 1 and the parking gear 41. The case 9 includes a first case portion 91 and a second case portion 92 joined to the first case portion 91 on the first axial side L 1.

In the present embodiment, the first case portion 91 includes a partition portion 93, a first peripheral wall portion 94, and a support portion 95. The partition portion 93 is disposed between the first housing chamber A1 and the second housing chamber A2 in the axial direction L. That is, the partition portion 93 is formed so as to partition the internal space of the case 9 into the first housing chamber A1 and the second housing chamber A2 in the axial direction L. The first peripheral wall portion 94 extends from the partition portion 93 to the first axial side L1 so as to surround the periphery of the second housing chamber A2. The support portion 95 is connected to the first peripheral wall portion 94 and supports the drive mechanism 43. In the example shown in FIG. 2, the support portion 95 is formed integrally with the first peripheral wall portion 94. The support portion 95 rotatably supports the shaft member 432 of the drive mechanism 43 in a state in which the shaft member 432 penetrates the support portion 95 in the radial direction R.

In the present embodiment, the first case portion 91 includes a fixing portion 96 to which the drive mechanism 43 is fixed. The fixing portion 96 is formed so as to protrude from the outer surface of the case 9. In the present embodiment, the fixing portion 96 is formed so as to protrude outward in a specific radial direction R (upward in FIG. 2) from the first peripheral wall portion 94. The fixing portion 96 is disposed so as to surround the side of the drive device 431 of the drive mechanism 43. In the example shown in FIG. 2, the drive device 431 is fixed to the fixing portion 96 by bolt fastening from the outer side in the specific radial direction R (upper side in FIG. 2) in a state in which the drive device 431 is housed in a space surrounded by the fixing portion 96.

In the present embodiment, at least a part of the fixing portion 96 is disposed on the second axial side L2 with respect to the third gear 13 or the fourth gear 14 that is positioned on the second axial side L2. In the example shown in FIG. 2, a part of the fixing portion 96 that is disposed on the second axial side L2 with respect to the drive device 431 is disposed on the second axial side L2 with respect to the third gear 13. A part of the fixing portion 96 that is disposed on the first axial side L1 with respect to the drive device 431 is disposed on the first axial side L1 with respect to the third gear 13.

As described above, in the present embodiment, the parking mechanism 4 includes the engagement mechanism 42 to be selectively engaged with the parking gear 41, and the drive mechanism 43 that drives the engagement mechanism 42.

The case 9 includes the fixing portion 96 to which the drive mechanism 43 is fixed.

The fixing portion 96 is formed so as to protrude from the outer surface of the case 9.

At least a part of the fixing portion 96 is disposed on the second axial side L2 with respect to the third gear 13 or the fourth gear 14 that is positioned on the second axial side L2.

According to this configuration, at least a part of the fixing portion 96 can be disposed close to the rotary electric machine MG in the axial direction L. Therefore, at least a part of the fixing portion 96 can be provided in the portion of the case 9 having a relatively high rigidity and supporting the rotary electric machine MG. Thus, the drive mechanism 43 can appropriately be supported by the case 9.

In the present embodiment, the second case portion 92 includes a second peripheral wall portion 97 and a side wall portion 98. The second peripheral wall portion 97 is formed in a tubular shape surrounding the periphery of the second housing chamber A2 so as to be joined to the first peripheral wall portion 94 of the first case portion 91 on the first axial side L1. The side wall portion 98 is formed so as to close the opening of the second peripheral wall portion 97 on the first axial side L1.

In the present embodiment, a joint portion C between the first case portion 91 and the second case portion 92 includes a first flange portion 94a formed on the first peripheral wall portion 94, and a second flange portion 97a formed on the second peripheral wall portion 97. The first flange portion 94a is formed so as to protrude outward in the radial direction R at the end of the first peripheral wall portion 94 on the first axial side L 1. The second flange portion 97a is formed so as to protrude outward in the radial direction R at the end of the second peripheral wall portion 97 on the second axial side L2. The first flange portion 94a and the second flange portion 97a are connected to each other by a fixing member such as a bolt in a state in which the end face of the first flange portion 94a on the first axial side L1 and the end face of the second flange portion 97a on the second axial side L2 are in contact with each other.

In the present embodiment, the entire drive mechanism 43 is disposed on the second axial side L2 with respect to the joint portion C between the first case portion 91 and the second case portion 92. In the example shown in FIG. 2, the drive device 431, the shaft member 432, the connection member 433, and the push member 434 are disposed on the second axial side L2 with respect to the third gear 13 or the fourth gear 14 on the first axial side L1 (in this case, the fourth gear 14).

As described above, in the present embodiment, the case 9 includes the first case portion 91 and the second case portion 92 joined to the first case portion 91 on the first axial side L1.

The parking mechanism 4 includes the engagement mechanism 42 to be selectively engaged with the parking gear 41, and the drive mechanism 43 that drives the engagement mechanism 42.

The entire drive mechanism 43 is disposed on the second axial side L2 with respect to the joint portion C between the first case portion 91 and the second case portion 92.

According to this configuration, the drive mechanism 43 can be disposed close to the rotary electric machine MG in the axial direction L. Therefore, it is possible to reduce the area where the thickness of the case 9 is increased to appropriately support the drive mechanism 43. Further, the support structure of the drive mechanism 43 can be simplified compared to a case where the drive mechanism 43 is disposed so as to straddle the joint portion C. Thus, the weight and cost of the case 9 can be reduced.

In the present embodiment, a thickness TH2 of a second portion 942 of the first peripheral wall portion 94 on the second axial side L2 with respect to the support portion 95 is larger than a thickness TH1 of a first portion 941 of the first peripheral wall portion 94 on the first axial side L1 with respect to the support portion 95. The support portion 95 is a portion that supports the shaft member 432 of the drive mechanism 43. The thickness TH1 of the first portion 941 is a thickness of a part of the first portion 941 that is adjacent to the support portion 95. The thickness TH2 of the second portion 942 is a thickness of a part of the second portion 942 that is adjacent to the support portion 95. The thickness TH1 of the first portion 941 may be the maximum value of the thickness in the entire area of the first portion 941, and the thickness TH2 of the second portion 942 may be the maximum value of the thickness in the entire area of the second portion 942. Alternatively, the thickness TH1 of the first portion 941 may be the minimum value of the thickness in the entire area of the first portion 941, and the thickness TH2 of the second portion 942 may be the minimum value of the thickness in the entire area of the second portion 942. Alternatively, the thickness TH1 of the first portion 941 may be the average of the thickness in the entire area of the first portion 941, and the thickness TH2 of the second portion 942 may be the average of the thickness in the entire area of the second portion 942.

As described above, in the present embodiment, the case 9 has the first housing chamber A1 that houses the rotary electric machine MG, and the second housing chamber A2 that houses the transmission 1 and the parking gear 41.

The first case portion 91 includes the partition portion 93 disposed between the first housing chamber A1 and the second housing chamber A2 in the axial direction L, the first peripheral wall portion 94 extending from the partition portion 93 to the first axial side L1 so as to surround the periphery of the second housing chamber A2, and the support portion 95 that is connected to the first peripheral wall portion 94 and supports the drive mechanism 43.

The thickness TH2 of the second portion 942 of the first peripheral wall portion 94 on the second axial side L2 with respect to the support portion 95 is larger than the thickness TH1 of the first portion 941 of the first peripheral wall portion 94 on the first axial side L1 with respect to the support portion 95.

As described above, the drive mechanism 43 can be disposed close to the rotary electric machine MG in the axial direction L. Therefore, according to this configuration, the support portion 95 that supports the drive mechanism 43 can be disposed close to the partition portion 93 in the axial direction L. Thus, it is possible to reduce the area occupied by the second portion 942 of the first peripheral wall portion 94 that is located on the second axial side L2 with respect to the support portion 95 and has a larger thickness than the first portion 941 of the first peripheral wall portion 94 on the first axial side L1 with respect to the support portion 95. Thus, the weight and cost of the case 9 can be reduced.

### 2. Second Embodiment

Hereinafter, a vehicle drive device 100 according to a second embodiment will be described with reference to the drawings. The present embodiment is different from the first embodiment in terms of the disposition of the gears of the transmission 1 and the direction of the differential gear mechanism 2. The differences from the first embodiment will mainly be described below. Points that are not particularly described are the same as those in the first embodiment.

In the present embodiment, the first gear 11 is disposed on the first axial side L1 with respect to the second gear 12. Accordingly, the third gear 13 meshing with the first gear 11 is disposed on the first axial side L1 with respect to the fourth gear 14 meshing with the second gear 12. In the present embodiment, the output gear 15 is disposed on the second axial side L2 with respect to the third gear 13 and the fourth gear 14. Therefore, in the present embodiment, the third gear 13, the fourth gear 14, the output gear 15, and the parking gear 41 are disposed on the second axis X2 in this order from the first axial side L1.

In the present embodiment, the differential gear unit 23 of the differential gear mechanism 2 is disposed on the first axial side L1 with respect to the differential input gear 21. The differential gear unit 23 is disposed so that the disposition area in the axial direction L overlaps the fourth gear 14.

### 3. Other Embodiments

(1) In the above embodiments, description has been given of the exemplary configuration in which the entire drive mechanism 43 is disposed on the second axial side L2 with respect to the joint portion C between the first case portion 91 and the second case portion 92. However, the present invention is not limited to such a configuration. For example, the drive mechanism 43 may be disposed so as to straddle the joint portion C. Alternatively, the entire drive mechanism 43 may be disposed on the first axial side L1 with respect to the joint portion C.
(2) In the above embodiments, description has been given of the exemplary configuration in which the first gear 11 and the second gear 12 are connected to the first shaft member 16 so as to rotate integrally with the first shaft member 16 and the third gear 13 and the fourth gear 14 are supported so as to be rotatable relative to the second shaft member 17. However, the present invention is not limited to such a configuration. The first gear 11 and the second gear 12 may be supported so as to be rotatable relative to the first shaft member 16, and the third gear 13 and the fourth gear 14 may be connected to the second shaft member 17 so as to rotate integrally with the second shaft member 17. The first gear 11 and the fourth gear 14 may be supported so as to be rotatable relative to the respective shaft members, and the second gear 12 and the third gear 13 may be connected to the respective shaft members so as to rotate integrally with the respective shaft members. Alternatively, the second gear 12 and the third gear 13 may be supported so as to be rotatable relative to the respective shaft members, and the first gear 11 and the fourth gear 14 may be connected to the respective shaft members so as to rotate integrally with the respective shaft members.
(3) In the above embodiments, description has been given of the exemplary configuration in which the meshing type engagement device 18 that selectively connects either one of the third gear 13 and the fourth gear 14 to the second shaft member 17 is disposed on the second axis X2 between the third gear 13 and the fourth gear 14 in the axial direction L. However, the present invention is not limited to such a configuration. For example, an engagement device that selectively connects the third gear 13 to the second shaft member 17 and an engagement device that selectively connects the fourth gear 14 to the second shaft member 17 may be provided in place of the meshing type engagement device 18. In this configuration, the output gear 15 may be disposed between the third gear 13 and the fourth gear 14 in the axial direction L. In such a case, the engagement device may be a friction engagement device instead of the meshing type engagement device. In the case where the first gear 11 and the second gear 12 are supported so as to be rotatable relative to the first shaft member 16 as in Item (2), it is appropriate that the meshing type engagement device 18 or the like be provided on the first axis X1. Also in this case, any other engagement device such as a friction engagement device may be provided in place of the meshing type engagement device 18.
(4) In the above embodiments, description has been given of the exemplary configuration in which the differential gear unit 23 of the differential gear mechanism 2 is disposed so that the disposition area in the axial direction L overlaps the fourth gear 14. However, the present invention is not limited to such a configuration. The differential gear unit 23 may be disposed so that the disposition area in the axial direction L overlaps both the third gear 13 and the fourth gear 14. In a case where the third gear 13 is positioned closer to the differential gear mechanism 2 in the axial direction L than the fourth gear 14, the differential gear unit 23 may be disposed so that the disposition area in the axial direction L overlaps the third gear 13.
(5) In the above embodiments, description has been given of the exemplary configuration in which at least a part of the fixing portion 96 of the case 9 is disposed on the second axial side L2 with respect to the third gear 13 or the fourth gear 14 that is positioned on the second axial side L2. However, the present invention is not limited to such a configuration. For example, the entire fixing portion 96 may be disposed on the second axial side L2 with respect to the third gear 13 or the fourth gear 14 that is positioned on the second axial side L2.
(6) The configurations disclosed in the above embodiments can be applied in combination with the configurations disclosed in other embodiments as long as there is no contradiction. Regarding the other configurations, the embodiments disclosed herein are merely exemplary in all respects. Thus, various modifications can be made as appropriate without departing from the scope of the present disclosure.

### 4. Outline of Embodiments

Hereinafter, the outline of the vehicle drive device (100) described above will be described.

A vehicle drive device (100) includes:
a rotary electric machine (MG) including a rotor (RT) disposed on a first axis (X1) and functioning as a driving force source for wheels (W);
a pair of output members (3) drivingly connected to the wheels (W);
a transmission (1) configured to change a speed of rotation transmitted from the rotary electric machine (MG) side;
a differential gear mechanism (2) configured to distribute the rotation transmitted from the transmission (1) to the pair of output members (3);
a parking mechanism (4) including a parking gear (41); and
a case (9) that houses the rotary electric machine (MG), the transmission (1), the differential gear mechanism (2), and the parking gear (41), in which
the transmission (1) includes a first gear (11) and a second gear (12) disposed on the first axis (X1), and a third gear (13), a fourth gear (14), and an output gear (15) disposed on a second axis (X2) parallel to the first axis (X1),
the first gear (11) and the third gear (13) mesh with each other, and the second gear (12) and the fourth gear (14) mesh with each other,
the differential gear mechanism (2) includes a differential input gear (21) disposed on a third axis (X3) parallel to the first axis (X1) and the second axis (X2) and meshing with the output gear (15),
a direction parallel to the first axis (X1) is defined as an axial direction (L), one side in the axial direction (L) is defined as a first axial side (L1), and the other side in the axial direction (L) is defined as a second axial side (L2),
the first gear (11) and the second gear (12) are disposed on the first axial side (L1) with respect to the rotor (RT), and
the parking gear (41) is disposed on the second axis (X2) on the second axial side (L2) with respect to the third gear (13), the fourth gear (14), and the output gear (15).

According to this configuration, the parking mechanism (4) including the parking gear (41) can be disposed close to the rotary electric machine (MG) in the axial direction (L). In general, the rotary electric machine (MG) is supported by the case (9), and the rigidity of the portion of the case (9) that supports the rotary electric machine (MG) is secured sufficiently. Therefore, by disposing the parking mechanism (4) close to the rotary electric machine (MG), it is possible to reduce the area where the thickness of the case (9) is increased to appropriately support the parking mechanism (4). Thus, the weight and cost of the case (9) can be reduced.

The parking mechanism (4) includes an engagement mechanism (42) to be selectively engaged with the parking gear (41), and a drive mechanism (43) configured to drive the engagement mechanism (42),
the case (9) includes a fixing portion (96) to which the drive mechanism (43) is fixed,
the fixing portion (96) is formed so as to protrude from an outer surface of the case (9), and
at least a part of the fixing portion (96) is disposed on the second axial side (L2) with respect to the third gear (13) or the fourth gear (14) that is positioned on the second axial side (L2).

According to this configuration, at least a part of the fixing portion (96) can be disposed close to the rotary electric machine (MG) in the axial direction (L). Therefore, at least a part of the fixing portion (96) can be provided in the portion of the case (9) having a relatively high rigidity and supporting the rotary electric machine (MG). Thus, the drive mechanism (43) can appropriately be supported by the case (9).

The case (9) includes a first case portion (91) and a second case portion (92) joined to the first case portion (91) on the first axial side (L1),
the parking mechanism (4) includes an engagement mechanism (42) to be selectively engaged with the parking gear (41), and a drive mechanism (43) configured to drive the engagement mechanism (42), and
the entire drive mechanism (43) is disposed on the second axial side (L2) with respect to a joint portion (C) between the first case portion (91) and the second case portion (92).

According to this configuration, the drive mechanism (43) can be disposed close to the rotary electric machine (MG) in the axial direction (L). Therefore, it is possible to reduce the area where the thickness of the case (9) is increased to appropriately support the drive mechanism (43). Further, the support structure of the drive mechanism (43) can be simplified compared to a case where the drive mechanism (43) is disposed so as to straddle the joint portion (C). Thus, the weight and cost of the case (9) can be reduced.

In the configuration in which the case (9) includes the first case portion (91) and the second case portion (92),
the case (9) has a first housing chamber (A1) that houses the rotary electric machine (MG), and a second housing chamber (A2) that houses the transmission (1) and the parking gear (41),
the first case portion (91) includes a partition portion (93) disposed between the first housing chamber (A1) and the second housing chamber (A2) in the axial direction (L), a peripheral wall portion (94) extending from the partition portion (93) to the first axial side (L1) so as to surround a periphery of the second housing chamber (A2), and a support portion (95) that is connected to the peripheral wall portion (94) and supports the drive mechanism (43), and
a thickness (TH2) of a part of the peripheral wall portion (94) on the second axial side (L2) with respect to the support portion (95) is larger than a thickness (TH1) of a part of the peripheral wall portion (94) on the first axial side (L1) with respect to the support portion (95).

As described above, the drive mechanism (43) can be disposed close to the rotary electric machine (MG) in the axial direction (L). Therefore, according to this configuration, the support portion (95) that supports the drive mechanism (43) can be disposed close to the partition portion (93) in the axial direction (L). Thus, it is possible to reduce the area occupied by a second portion (942) that is the part of the peripheral wall portion (94) that is located on the second axial side (L2) with respect to the support portion (95) and has a larger thickness than a first portion (941) that is the part of the peripheral wall portion (94) on the first axial side (L1) with respect to the support portion (95). Thus, the weight and cost of the case (9) can be reduced.

The transmission (1) includes a first shaft member (16) disposed on the first axis (X1), and a second shaft member (17) disposed on the second axis (X2),
the rotor (RT) is connected to the first shaft member (16) so as to rotate integrally with the first shaft member (16),
the output gear (15) and the parking gear (41) are connected to the second shaft member (17) so as to rotate integrally with the second shaft member (17),
the first gear (11) and the second gear (12) are connected to the first shaft member (16) so as to rotate integrally with the first shaft member (16),
the third gear (13) and the fourth gear (14) are supported so as to be rotatable relative to the second shaft member (17), and
a meshing type engagement device (18) configured to selectively connect either one of the third gear (13) and the fourth gear (14) to the second shaft member (17) is disposed on the second axis (X2) between the third gear (13) and the fourth gear (14) in the axial direction (L).

According to this configuration, in the power transmission path from the rotary electric machine (MG) to the pair of output members (3), the first gear (11) and the second gear (12) disposed on the upstream side are fixed gears that rotate integrally with the first shaft member (16), and the third gear (13) and the fourth gear (14) disposed on the downstream side are idling gears that rotate relative to the second shaft member (17). In general, the diameter of the fixed gear is easily reduced because there is no need to dispose a bearing or the like in a relative rotating portion as in the idling gear. Therefore, the diameters of the first gear (11) and the second gear (12) can be reduced easily. Thus, the diameters of the third gear (13) and the fourth gear (14) can also be reduced while securing a large speed reducing ratio of the power transmission path from the rotary electric machine (MG) to the pair of output members (3). Accordingly, the dimension of the vehicle drive device (100) in a radial direction (R) can be reduced.

According to this configuration, the meshing type engagement device (18) is disposed between the third gear (13) and the fourth gear (14) in the axial direction (L). Thus, it is possible to realize a configuration in which either one of the third gear (13) and the fourth gear (14) is selectively connected to the second shaft member (17) while suppressing an increase in the size of the meshing type engagement device (18).

The differential gear mechanism (2) includes a differential gear unit (23) configured to distribute the rotation of the differential input gear (21) to the pair of output members (15),
the third gear (13) and the fourth gear (14) are disposed on either one of the first axial side (L1) and the second axial side (L2) with respect to the output gear (15), and
the differential gear unit (23) is disposed so that a disposition area in the axial direction (L) overlaps at least one of the third gear (13) and the fourth gear (14).

According to this configuration, the dimension of the vehicle drive device (100) in the axial direction (L) can be reduced compared to a configuration in which the differential gear unit (23) is disposed so that the disposition area in the axial direction (L) overlaps neither the third gear (13) nor the fourth gear (14).

### INDUSTRIAL APPLICABILITY

The technology according to the present disclosure is applicable to a vehicle drive device including a rotary electric machine that functions as a driving force source for wheels, a pair of output members drivingly connected to the wheels, a transmission that changes the speed of rotation transmitted from the rotary electric machine side, a differential gear mechanism that distributes the rotation transmitted from the transmission to the pair of output members, and a parking mechanism including a parking gear.

### Description of Reference Numerals

100: vehicle drive device, 1: transmission, 11: first gear, 12: second gear, 13: third gear, 14: fourth gear, 15: output gear, 2: differential gear mechanism, 21: differential input gear, 3: output member, 4: parking mechanism, 41: parking gear, 9: case, MG: rotary electric machine, RT: rotor, W: wheel, X1: first axis, X2: second axis, X3: third axis, L: axial direction, L1: first axial side, L2: second axial side

## Claims

1. A vehicle drive device comprising:
a rotary electric machine including a rotor disposed on a first axis and functioning as a driving force source for wheels;
a pair of output members drivingly connected to the wheels;
a transmission configured to change a speed of rotation transmitted from the rotary electric machine side;
a differential gear mechanism configured to distribute the rotation transmitted from the transmission to the pair of output members;
a parking mechanism including a parking gear; and
a case that houses the rotary electric machine, the transmission, the differential gear mechanism, and the parking gear, wherein
the transmission includes a first gear and a second gear disposed on the first axis, and a third gear, a fourth gear, and an output gear disposed on a second axis parallel to the first axis,
the first gear and the third gear mesh with each other, and the second gear and the fourth gear mesh with each other,
the differential gear mechanism includes a differential input gear disposed on a third axis parallel to the first axis and the second axis and meshing with the output gear,
a direction parallel to the first axis is defined as an axial direction, one side in the axial direction is defined as a first axial side, and the other side in the axial direction is defined as a second axial side,
the first gear and the second gear are disposed on the first axial side with respect to the rotor, and
the parking gear is disposed on the second axis on the second axial side with respect to the third gear, the fourth gear, and the output gear.

2. The vehicle drive device according to claim 1, wherein
the parking mechanism includes an engagement mechanism to be selectively engaged with the parking gear, and a drive mechanism configured to drive the engagement mechanism,
the case includes a fixing portion to which the drive mechanism is fixed,
the fixing portion is formed so as to protrude outward from the case, and
at least a part of the fixing portion is disposed on the second axial side with respect to the third gear or the fourth gear that is positioned on the second axial side.

3. The vehicle drive device according to claim 1 or 2, wherein
the case includes a first case portion and a second case portion joined to the first case portion on the first axial side,
the parking mechanism includes an engagement mechanism to be selectively engaged with the parking gear, and a drive mechanism configured to drive the engagement mechanism, and
the entire drive mechanism is disposed on the second axial side with respect to a joint portion between the first case portion and the second case portion.

4. The vehicle drive device according to claim 3, wherein
the case has a first housing chamber that houses the rotary electric machine, and a second housing chamber that houses the transmission and the parking gear,
the first case portion includes a partition portion disposed between the first housing chamber and the second housing chamber in the axial direction, a peripheral wall portion extending from the partition portion to the first axial side so as to surround a periphery of the second housing chamber, and a support portion that is connected to the peripheral wall portion and supports the drive mechanism, and
a thickness of a part of the peripheral wall portion on the second axial side with respect to the support portion is larger than a thickness of a part of the peripheral wall portion on the first axial side with respect to the support portion.

5. The vehicle drive device according to any one of claims 1 to 4, wherein
the transmission includes a first shaft member disposed on the first axis, and a second shaft member disposed on the second axis,
the rotor is connected to the first shaft member so as to rotate integrally with the first shaft member,
the output gear and the parking gear are connected to the second shaft member so as to rotate integrally with the second shaft member,
the first gear and the second gear are connected to the first shaft member so as to rotate integrally with the first shaft member,
the third gear and the fourth gear are supported so as to be rotatable relative to the second shaft member, and
a meshing type engagement device configured to selectively connect either one of the third gear and the fourth gear to the second shaft member is disposed on the second axis between the third gear and the fourth gear in the axial direction.

6. The vehicle drive device according to any one of claims 1 to 5, wherein
the differential gear mechanism includes a differential gear unit configured to distribute the rotation of the differential input gear to the pair of output members,
the third gear and the fourth gear are disposed on either one of the first axial side and the second axial side with respect to the output gear, and
the differential gear unit is disposed so that a disposition area in the axial direction overlaps at least one of the third gear and the fourth gear.
